# FASCICULE DE BREVET EUROPEEN

(11) **EP 3 138 077 B1**
(45) Date de publication et mention de la délivrance du brevet: **18.08.2021**
(21) Numéro de dépôt: 15721636.7
(22) Date de dépôt: 29.04.2015
(51) Int. Cl.: G06T 7/11, G06T 7/187, G06T 7/00

(54) **METHODE POUR LA QUANTIFICATION DE LA PRESENCE DE GRAISSES DANS UNE REGION DU COEUR**
VERFAHREN ZUR QUANTIFIZIERUNG DES VORHANDENSEINS VON FETTEN IN EINER HERZREGION
METHOD FOR QUANTIFYING THE PRESENCE OF FATS IN A REGION OF THE HEART

(30) Priorité: 30.04.2014 FR 1453941
(43) Date de publication de la demande: 08.03.2017
(73) Titulaire: Université de Bordeaux, 33000 Bordeaux (FR); Institut National de la Santé et de la Recherche Médicale (INSERM), 75013 Paris (FR); Centre Hospitalier Universitaire de Bordeaux, 33404 Talence (FR)
(72) Inventeur: COCHET, Hubert, F-33000 Bordeaux (FR); JAIS, Pierre, F-33160 St Médard en Jalles (FR)
(74) Mandataire: Cabinet Camus Lebkiri
(86) Numéro de dépôt international: PCT/EP2015/059362
(87) Numéro de publication internationale: WO 2015/165978

(56) Documents cités:
- US-A- 6 058 218
- US-A1- 2008 075 343
- US-A1- 2012 310 074
- GEORG MÜHLENBRUCH ET AL: "Global left ventricular function in cardiac CT. Evaluation of an automated 3D region-growing segmentation algorithm", EUROPEAN RADIOLOGY, SPRINGER, BERLIN, DE, vol. 16, no. 5, 1 mai 2006 (2006-05-01), pages 1117-1123, XP019336328, ISSN: 1432-1084, DOI: 10.1007/S00330-005-0079-Z
- I-CHEN TSAI ET AL: "Left ventricular myocardium segmentation on delayed phase of multi-detector row computed tomography", INTERNATIONAL JOURNAL OF COMPUTER ASSISTED RADIOLOGY AND SURGERY; A JOURNAL FOR INTERDISCIPLINARY RESEARCH, DEVELOPMENT AND APPLICATIONS OF IMAGE GUIDED DIAGNOSIS AND THERAPY, SPRINGER, BERLIN, DE, vol. 7, no. 5, 19 avril 2012 (2012-04-19), pages 737-751, XP035108793, ISSN: 1861-6429, DOI: 10.1007/S11548-012-0688-3
- I-CHEN TSAI ET AL: "Left ventricular myocardium segmentation on arterial phase of multi-detector row computed tomography", COMPUTERIZED MEDICAL IMAGING AND GRAPHICS, PERGAMON PRESS, NEW YORK, NY, US, vol. 36, no. 1, 18 mars 2011 (2011-03-18), pages 25-37, XP028340976, ISSN: 0895-6111, DOI: 10.1016/J.COMPMEDIMAG.2011.03.003 [extrait le 2011-03-28]
- WILLIAMS ET AL: "Cardiomyopathy: appearances on ECG-gated 64-detector row computed tomography", CLINICAL RADIOLOGY, LIVINGSTONE, HARLOW, GB, vol. 63, no. 4, 5 novembre 2007 (2007-11-05), pages 464-474, XP022509945, ISSN: 0009-9260
- None

## Description

### DOMAINE

Le domaine de l'invention concerne les méthodes pour quantifier la présence de tissu fibro-adipeux dans une région du cœur, notamment dans l'épaisseur de la paroi myocardique. Le procédé de l'invention concerne également les systèmes permettant de traiter des images numériques obtenues par scanner et permettant d'effectuer des opérations pour aboutir à une telle quantification et, en outre, pour générer une cartographie des régions comprenant des masses fibro-adipeuses.

### ETAT DE L'ART

Les procédés d'imagerie actuels permettent d'évaluer visuellement à partir d'images issues d'acquisitions de scanner ou d'IRM la présence de tissu fibro-adipeux dans la région du cœur notamment à la surface de la paroi myocardique du ventricule droit. En revanche, les procédés actuels ne permettent pas d'obtenir une quantification des masses fibro-adipeuses et une cartographie de la répartition de ces masses à la surface de la paroi du cœur et dans l'épaisseur de la paroi.

Le document US 2012/310074 intitulé « Medical image processing apparatus, a medical imaging apparatus, and a medical image processing program » est connu de l'état de la technique.

### RESUME DE L'INVENTION

L'invention vise à pallier aux inconvénients précités.

Un objet de l'invention concerne une méthode pour une quantification de présence de graisses dans une région du cœur selon la revendication 1.

Un avantage d'une telle méthode est de quantifier une proportion de masses graisseuses dans la paroi pour en effectuer des analyses. Ainsi il est possible également de cartographier la paroi du cœur. Cette méthode trouve de nombreuses applications notamment dans le guidage d'une intervention sur le cœur, dans l'identification d'un type de paroi musculaire du cœur d'un patient, dans le pronostique d'une attitude du cœur ou encore dans le diagnostic d'une pathologie du cœur. Enfin, cette méthode permet de modéliser certaines densités particulières d'un cœur de manière à établir des statistiques d'une population donnée par exemple pour établir un référentiel de données.

Selon un mode de réalisation, l'acquisition d'une image tridimensionnelle du cœur est réalisée au moyen d'un scanner, la densité des pixels de l'image étant exprimée dans l'unité de Hounsfield.

Selon un mode de réalisation, la méthode pour une quantification de présence de graisses dans une région du cœur comprend :
- une définition d'au moins une frontière de l'image tridimensionnelle de la cavité considérée du cœur ;
- la croissance de la graine s'effectuant jusqu'à rencontrer au moins une frontière ou une zone d'une densité de pixels inférieure au seuil prédéfini.

Selon un mode de réalisation, la frontière permet de séparer la partie de l'image acquise comprenant la cavité considérée d'un orifice débouchant dans ladite cavité dont la densité de pixels est comprise dans la première gamme de valeurs.

Un avantage de la définition de frontière(s), par exemple formant un plan, est qu'elle permet de limiter la zone de croissance à un volume donné. De ce fait, la définition de frontière(s) formant des plans permet de limiter les calculs lors de l'opération de croissance à la région s'étendant dans un orifice. Ainsi, la densité des pixels à proximité de l'orifice ou dans l'orifice ne sont pas comparés à un seuil prédéfini, ce qui limite les opérations de calculs. En effet, la région s'étendant dans les orifices de la cavité, acquise en même temps que l'image, ne comprend pas de paroi dans laquelle on souhaite calculer des densités de pixels de la seconde gamme de valeurs par exemple correspondant à des masses graisseuses.

Selon un mode de réalisation, la croissance de la graine s'effectue en trois dimensions à partir d'une sélection de pixels sur un plan de coupe de la cavité.

Selon un mode de réalisation, la croissance de la graine s'effectue en deux dimensions sur chaque plan de coupe de la cavité, la « zone 3D étendue » étant reconstituée par l'ensemble de « zones 2D étendue».

Un avantage de l'opération de croissance à partir d'une sélection automatique ou manuelle de pixels dans la cavité est qu'elle permet rapidement d'obtenir le contour 3D de la cavité. Un avantage de procéder ainsi est de bénéficier d'une homogénéité de la densité de pixels de la cavité pour faciliter la croissance de proche en proche. En effet, une telle opération de croissance effectuée à partir d'une sélection de pixels de la paroi serait plus difficile à réaliser puisque la paroi peut potentiellement comprendre une grande disparité de densité de pixels. Une telle opération conduirait potentiellement à des erreurs de détourage de la région formée de la paroi compte tenu par exemple de la présence de graisse ayant une densité de pixels différente que l'on cherche justement à isoler grâce à la méthode de l'invention.

Selon un mode de réalisation, le seuil prédéfini est défini au regard d'une détermination d'une densité de pixels de référence calculée à partir d'une mesure dans l'image acquise, ladite image acquise comprenant la cavité et au moins une des parois de ladite cavité.

Selon un mode de réalisation, la densité de référence est calculée à partir d'une mesure effectuée sur des pixels de la cavité, la densité de référence correspondant à une limite basse de la première gamme de valeurs densité de pixels.

Selon un mode de réalisation, la densité de référence est calculée à partir d'une mesure effectuée sur des pixels d'une paroi définissant une région d'intérêt, la densité de référence correspondant à une limite haute d'une troisième gamme de valeurs de densité de pixels de la région d'intérêt.

Selon un mode de réalisation, la densité de pixels de référence est calculée dans une plage de valeurs située entre la première gamme de valeurs et la troisième gamme de valeurs de sorte à discriminer au mieux l'appartenance d'un pixel à l'une de ces gammes de valeurs.

Selon un mode de réalisation, la mesure de la densité de référence est choisie parmi une valeur prédéfinie correspondant à un profil type d'un cœur.

Un avantage d'un calcul d'une densité de référence est de permettre une extension de la graine jusqu'à la limite interne de la cavité, dite endocarde, sans « mordre » sur des pixels de la paroi. Cette solution permet d'isoler toute la région de la paroi pour en dénombrer les pixels ayant une certaine densité de pixels. De ce fait les mesures sur la paroi ont une bonne précision et prennent en compte toute l'épaisseur de la paroi. Enfin, cela permet une opération simple de comparaison d'une densité de pixel lors de l'opération de croissance en s'assurant d'une bonne discrimination entre les pixels de la paroi et ceux de la cavité.

Selon un mode de réalisation, l'opération de dilatation est réitérée une pluralité de fois de sorte à générer une pluralité d'images 3D dilatées, les dilatations successives étant déterminées de sorte que chaque nouvelle image 3D dilatée comprennent la précédente image 3D dilatée.

Selon un mode de réalisation, une couche 3D d'une région périphérique de l'image 3D étendue est extraite par soustraction d'une N-1^{ieme} image dilatée de l'image 3D étendue à la N^{ième} image dilatée de l'image 3D étendue.

Un avantage de cette solution d'extraction couche par couche est de réaliser un découpage fin de la paroi pour isoler certaines densités de pixels d'une couche. Le traitement couche par couche de la paroi permet une meilleure segmentation de la région définissant la paroi, notamment pour limiter l'opération de dénombrement des pixels d'une densité donnée à l'épicarde sans la dépasser.

Selon un mode de réalisation, une opération de quantification comprend le dénombrement du nombre de pixels d'une densité comprise dans la seconde gamme de valeurs dans une couche 3D extraite ou d'une région périphérique 3D.

Un avantage de cette opération est de permettre de calculer la proportion de certaine densité de pixels correspondant par exemple à des masses graisseuses. En effet, les régions présentant des masses graisseuses dans la paroi peuvent être isolées en calculant la densité de pixels dans une certaine gamme de valeur dans la paroi. Ceci est possible car la densité de pixels de la graisse comporte des valeurs différentes des densités de pixels du muscle.

Selon un mode de réalisation, une opération de seuillage des densités de pixels de la région 3D périphérique comprend une répartition selon une pluralité de gammes de valeurs de différentes proportions de densités de pixels.

Selon un mode réalisation, une génération d'une cartographie 3D de la paroi de la cavité comprend la représentation des pixels d'une densité comprise dans la seconde gamme de valeurs avec un codage colorimétrique prédéfini.

Un avantage de ce mode de réalisation est de permettre à un opérateur de visualiser la paroi du cœur par exemple pour préparer une intervention.

Selon un mode réalisation, une génération d'une cartographie 3D de la paroi de la cavité comprend une subdivision de la seconde gamme de valeurs en une pluralité de sous-gammes de valeurs correspondant à différentes proportions de densités de pixels avec un codage colorimétrique prédéfini attribué à chaque subdivision.

Un avantage de ce mode de réalisation est de permettre de visualiser différentes régions de la paroi avec différentes couleurs sur un écran selon le taux de graisse présent dans les régions. L'utilisation d'un codage colorimétrique segmenté permet une meilleure appréciation des zones impactées par la présence de graisses.

Avantageusement, l'opération de dilatation comprend une extension uniforme de la paroi du volume tridimensionnel de la zone 3D. Cette extension peut être définie préférentiellement sur une distance comprise entre 1 mm et 12 mm. Une valeur de 3mm est particulièrement avantageuse pour quantifier les présences de graisses dans la paroi du ventricule droit.

Avantageusement, la densité de référence est déterminée à partir d'une sélection de pixels dans une paroi séparant le ventricule droit du ventricule gauche.

Selon un exemple de réalisation, la première gamme de valeurs est comprise entre 200 et 400 UH. La troisième gamme de valeurs est comprise entre -100 et 100 UH. La seconde gamme de valeurs est comprise entre -30 et -10 UH.

Avantageusement, lorsque différentes dilatations sont configurées pour obtenir une pluralité d'images 3D, chaque nouvelle image 3D dilatée comprend une couche uniforme d'une épaisseur d'au moins un pixel en plus que la précédente image 3D dilatée.

Avantageusement, selon un exemple de réalisation, la cavité du cœur est le ventricule droit et que les plans valvulaires sont les plans tricuspide et pulmonaire.

Avantageusement, les bornes de la seconde gamme de valeurs sont définies pour identifier des masses graisseuses dans la paroi.

Un autre objet de l'invention concerne un système pour la visualisation d'une imagerie d'un organe permettant la visualisation de masses graisseuses, mettant en œuvre le procédé de l'invention. Le système de l'invention comprend :
▪ un afficheur permettant :
   ∘ de visualiser une coupe d'une image tridimensionnelle acquise par un scanner ;
   ∘ de visualiser une image tridimensionnelle dont la cartographie générer par le procédé de l'invention ;
▪ un sélectionneur :
   ∘ d'au moins un pixel pour définir une densité de référence et ;
   ∘ d'au moins un pixel pour générer une zone 3D étendue obtenue par croissance de proche en proche ;
▪ un outil permettant de tracer une ligne définissant au moins un plan valvulaire ;
▪ une interface :
   ∘ permettant de paramétrer la distance de dilatation d ou une proportion de dilatation ;
   ∘ d'extraire une surépaisseur tridimensionnelle à partir du volume issu de la zone 3D étendue et de zone 3D dilatée ;
▪ des moyens de calculs permettant :
   ∘ de dénombrer le nombre de pixels de la surépaisseur tridimensionnelle ayant une densité comprise dans un intervalle de valeur prédéfini ;
   ∘ de réaliser tous les calculs permettant de traiter les opérations sur les images 3D dont notamment les opérations de dilatation, d'extension, d'extraction.

### BREVE DESCRIPTION DES FIGURES

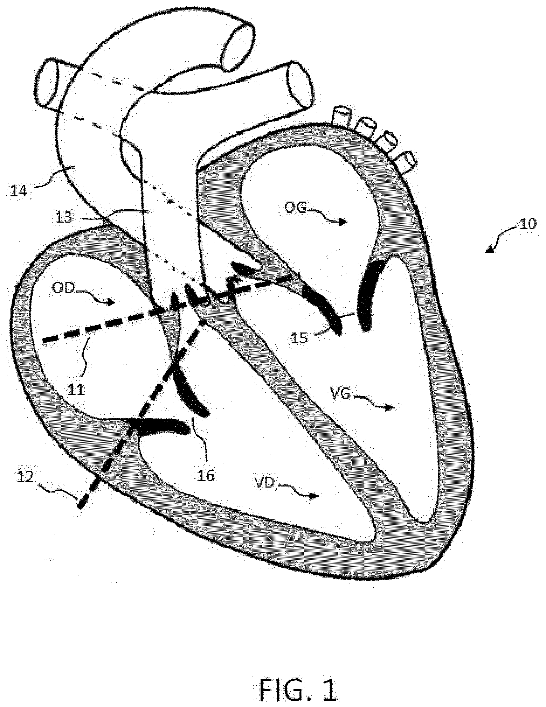

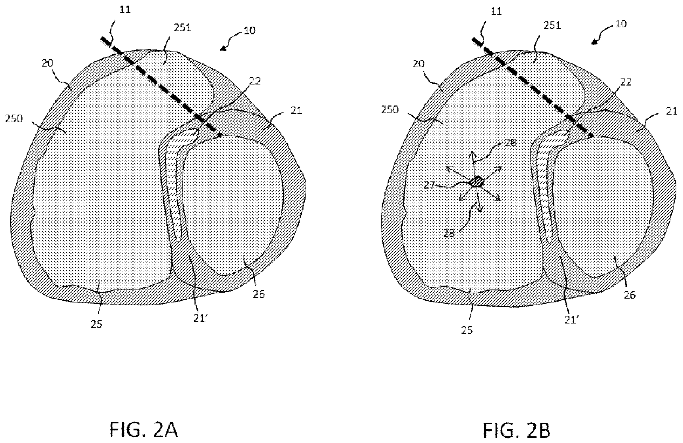

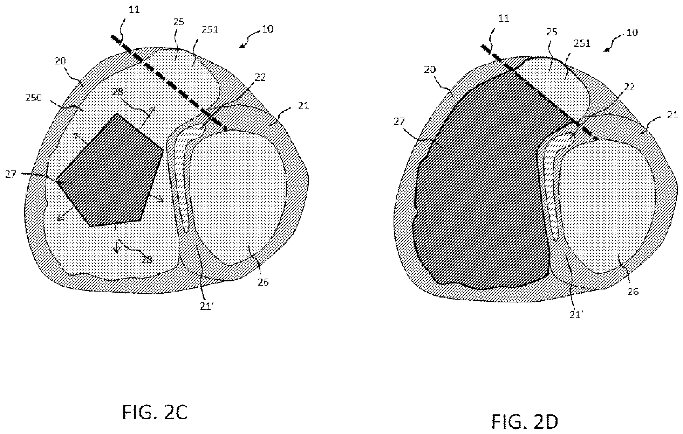

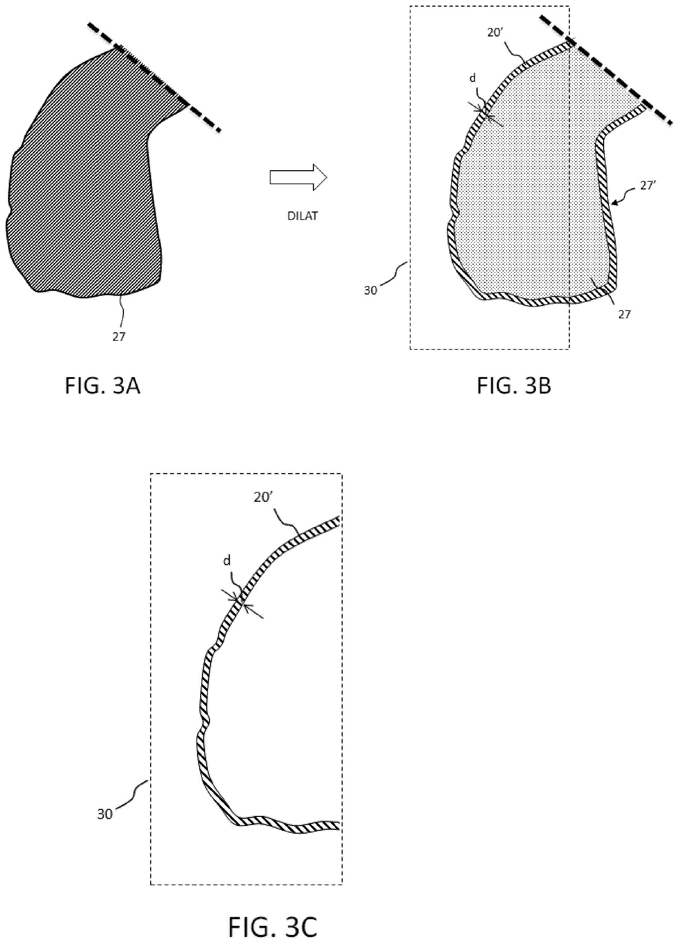

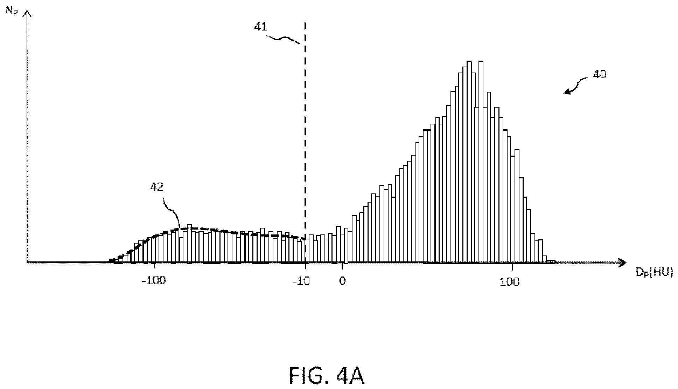

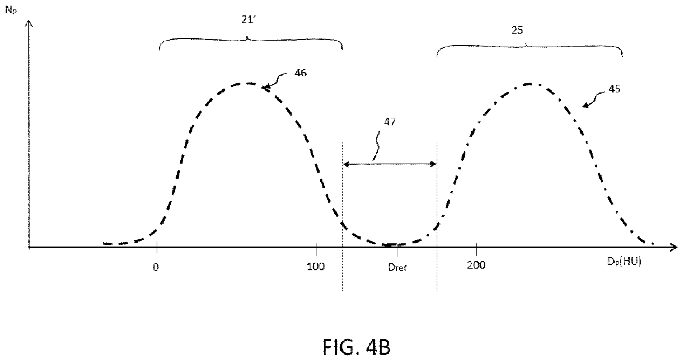

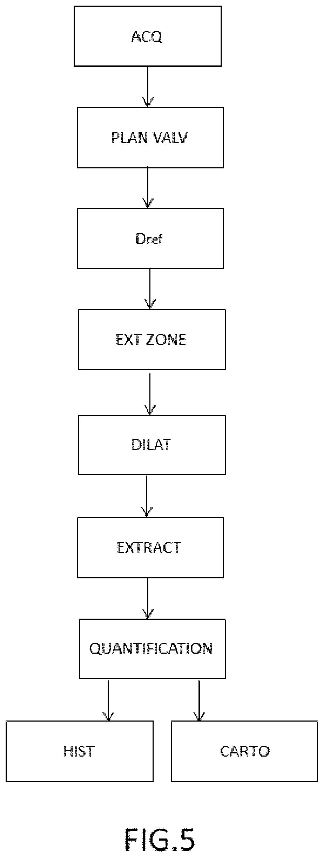

D'autres caractéristiques et avantages de l'invention ressortiront à la lecture de la description détaillée qui suit, en référence aux figures annexées, qui illustrent :
▪ figure 1: une vue d'un cœur et des régions formant des cavités et des parois ;
▪ figure 2A : une coupe d'une image tridimensionnelle du cœur capturée par un scanner avec la définition d'un plan valvulaire selon le procédé de l'invention ;
▪ figure 2B : une sélection d'une zone qui sera étendue selon le procédé de l'invention dans une région 2D ou 3D de l'image obtenue d'une cavité cardiaque, représentant ici le ventricule droit ;
▪ figure 2C : une croissance d'une zone selon le procédé de l'invention dans une région 2D ou 3D de l'image obtenue d'une cavité cardiaque représentant ici le ventricule droit;
▪ figure 2D : la génération d'une zone 2D ou 3D étendue délimitée notamment par le bord interne de la paroi définissant la cavité selon le procédé de l'invention ;
▪ figures 3A, 3B : une génération d'une zone 2D ou 3D étendue dilatée comprenant la cavité et la paroi selon le procédé de l'invention ;
▪ figure 3C : la génération d'une zone 2D ou 3D périphérique définissant la paroi analysée, obtenue par soustraction de la zone définissant la cavité selon le procédé de l'invention ;
▪ figure 4A : un seuillage sur histogramme permettant de définir les pixels de l'image contenant du tissu fibro-adipeux, et ainsi de quantifier le contenu de tissu fibro-adipeux contenu dans la paroi et d'en cartographier la distribution selon le procédé de l'invention ;
▪ figure 4B : un exemple de plage valeurs dans laquelle la densité de pixels de référence peut être calculée ;
▪ figure 5 : les principales étapes du procédé de l'invention.

### DESCRIPTION

La figure 1 représente un cœur 10 humain. Sont représentés sur la figure 1, au sein du cœur 10 : un ventricule gauche, noté VG, un ventricule droit, noté VD, une oreillette droite, notée OD, et une oreillette gauche, notée OG.

Dans la suite de la description, nous nommons « cavité » un volume sanguin circulant contenu dans le cœur et limité par des parois cardiaques. Il existe 4 cavités dans le cœur : un ventricule gauche VG, un ventricule droit VD, une oreillette droite OD et une oreillette gauche OG.

Les cavités accueillent un débit de sang qui transite entre les différentes artères, veines et valves reliant certains volumes entre eux. A titre d'exemple, la valve tricuspide 16 est représentée entre le ventricule droit VD et l'oreillette droite OD, la valve mitrale 15 est également représentée entre l'oreillette gauche OG et le ventricule gauche VG. En outre, l'aorte 14 est représentée prenant naissance dans le ventricule gauche VG et l'artère pulmonaire 13 est représentée prenant naissance dans le ventricule droit VD.

Afin de mieux comprendre la description qui suit, les orifices valvulaire(s), aortique(s) ou veineux débouchant ou sortant de chaque volume sanguin circulant du cœur sont nommés des « orifices ».

Le procédé de l'invention comprend une étape comportant l'acquisition d'une image 3D du cœur ou d'une région du cœur. Préférentiellement, l'image acquise comporte au moins une cavité telle que le ventricule droit VD ou le ventricule gauche VG ou une des oreillettes OD, OG ainsi que la paroi entourant ladite cavité. Cette paroi comprend un muscle appelé myocarde, et s'étend depuis une limite interne appelée « endocarde » jusqu'à une limite externe appelée « épicarde ».

La figure 2A représente une vue de coupe d'une image 3D d'un cœur acquise au moyen d'un scanner. Différentes zones apparaissent dont :
- une zone 25 délimitant la cavité du ventricule droit VD ;
- une zone 20 délimitant la paroi du ventricule droit VD ;
- une zone 26 délimitant la cavité du ventricule gauche VG ;
- une zone 21 délimitant la paroi du ventricule gauche VG ;
- une zone 21' délimitant la paroi située entre les deux ventricules gauche et droit, appelée le septum.

Les parois 20, 21 et 21' sont une unique paroi musculaire entourant les différentes cavités. Les différentes notations 20, 21 et 21' permettent de différencier une zone de la paroi 21' située entre deux cavités, comme par exemple le VD et VG, d'une paroi 20 ou 21 séparant une cavité d'un autre organe ou du milieu dans lequel le cœur est présent.

Les zones représentées en 2 dimensions délimitant des régions d'une image de coupe sont issues de zones d'une image acquise en 3 dimensions. Ainsi à titre d'exemple on note la zone 3D : la zone tridimensionnelle reconstituée à partir de l'ensemble des zones 2D de chaque plan de coupe. Ainsi on désignera indifféremment la zone 25 :
▪ une zone 2D désignant la coupe d'une image 3D du ventricule droit VD qui est représentée sur la figure 2A ;
▪ une zone 3D désignant le volume de l'image 3D du ventricule droit VD issue de l'ensemble des images de coupe 2D de ladite zone.

Le procédé de l'invention comprend donc l'acquisition d'une image 3D préférentiellement obtenue par scanner. Cette étape d'acquisition est notée ACQ à la figure 5. Le procédé d'acquisition de l'image relève de la tomodensitométrie également appelée « scanographie ». Ces techniques sont également identifiées comme le CT-scan ou le CAT-scan et reposent sur la mesure de l'absorption des rayons X par les tissus d'un organe. La numérisation des images permet de reconstruire l'image 2D et 3D des structures anatomiques de la région observée.

L'ordinateur attribue à chaque pixel de l'image une valeur d'échelle de gris proportionnelle à l'atténuation des rayons X par le volume corporel correspondant. Le paramètre mesuré est un coefficient d'atténuation que l'on nomme communément « densité ». Cette densité est spécifique du tissu imagé. Elle s'exprime en unités Hounsfield (UH) et se distribue sur une échelle allant de -1000UH pour l'air à +1000UH pour l'os dense cortical, en passant par -50UH pour le tissu adipeux et 0 pour l'eau. Au sein du cœur, la densité obtenue par scanner diffère entre la paroi et la cavité. Au sein de la paroi, les densités fibro-adipeuses sont différentes des densités musculaires normales.

L'image 3D numérisée peut être acquise et sauvegardée par un ordinateur qui comprend des moyens de calculs et un écran permettant de visualiser l'image 3D générée.

L'image générée 3D comprend une répartition volumétrique de pixels dont la densité de pixels peut être mesurée notamment en sélectionnant un pixel donné ou une zone donnée. Il est possible par exemple de calculer la moyenne et la dispersion des valeurs de densité, c'est-à-dire l'écart-type, au sein d'un groupe de pixels sélectionné dans le plan ou le volume d'imagerie. Une telle sélection de pixel se nomme une « région d'intérêt ».

Le procédé de l'invention comprend une étape permettant de définir au moins un plan définissant au moins une frontière de traitement des images 3D considérées dans les étapes ultérieures du procédé. Ce ou ces plan(s) sont nommé(s) un ou des plan(s) valvulaire(s) dans la suite de la description. Cette étape est notée PLAN VALV à la figure 5.

Un plan valvulaire permet de définir une cavité fermée du point de vue de la continuité du flux sanguin circulant dans le volume sanguin circulant définissant la cavité.

Selon les cavités considérées, différents sites d'entrée et de sortie sont présentes de manière à permettre une continuité du flux sanguin circulant. Sur la figure 1, on note les sites d'entrées et de sorties des cavités du cœur suivantes :
▪ Cavité OD:
   ∘ entrée = veines caves ;
   ∘ sortie = valve tricuspide ;
▪ Cavité VD:
   ∘ entrée=valve tricuspide ;
   ∘ sortie=valve pulmonaire ;
▪ Cavité OG:
   ∘ entrée=veines pulmonaires ;
   ∘ sortie=valve mitrale ;
▪ Cavité VG:
   ∘ entrée=valve mitrale ;
   ∘ sortie=valve aortique.

La figure 2A représente un plan valvulaire 11 permettant de disjoindre la zone 25 en une première zone 250 et une seconde zone 251. La seconde zone 251 communique d'un point de vue de l'image 3D avec une région correspondant à l'artère pulmonaire 13 qui sort du ventricule droit VD. La définition du plan valvulaire 11 permet, d'un point de vue du traitement de l'image, de dissocier l'artère pulmonaire 13 et le ventricule droit VD par la génération d'une frontière plane 11. De ce fait, il devient possible grâce à la définition d'un tel plan valvulaire d'appliquer des traitements d'images du volume 250 par analyse de la similarité des densités de pixels tout en considérant un volume fermé.

La figure 1 représente un second plan valvulaire 12 qui permet de séparer le ventricule droit VD de l'oreillette droite OD au niveau de la valve tricuspide 16.

La définition de ces plans valvulaires permet de définir une région 3D fermée pour le traitement d'images et des opérations subséquentes qui seront réalisées par le procédé de l'invention.

Il est en théorie préférable de définir autant de plans valvulaires que d'orifices présents dans la cavité considérée. Cependant, la définition d'une cavité peut permettre de définir une frontière séparant une cavité de plusieurs orifices si ces derniers sont co-localisés dans une région proche. Selon une variante de réalisation, une frontière 11 ou 12 peuvent être définie comme une surface courbe ou un ensemble de plans.

La figure 2A représente un plan valvulaire 11 définissant une frontière supérieure du ventricule droit VD. Un second plan valvulaire tel que le plan 12 peut être également défini sur cette figure. Un opérateur peut également choisir une autre image de coupe dans laquelle les orifices seront visibles pour définir au mieux la région délimitée. Ainsi, chaque plan valvulaire peut être défini sur une même image de coupe ou sur différentes images de coupes de l'image 3D acquise de la cavité.

Cette étape peut être réalisée au moyen d'une action d'un opérateur à partir d'un outil d'une palette graphique dans laquelle l'image est éditable. L'opérateur trace un trait manuellement, le trait représenté à l'écran génère un plan de coupe sur l'image 3D selon l'axe non représenté sur l'image.

Enfin, selon un mode de réalisation particulier, le procédé de l'invention permet de générer un plan par défaut qui peut être validé ou modifié par un opérateur.

Selon un autre mode de réalisation, lorsque l'anatomie d'une cavité considérée est connue à l'avance, par exemple s'il s'agit d'un cœur humain, alors les plans valvulaires peuvent être générés selon des proportions de l'image du cœur acquise et selon un angle d'orientation détecté de l'image acquise. Une méthode de reconnaissance de forme peut être utilisée de manière à :
▪ automatiquement identifier et localiser les entrées/sorties de la cavité et ;
▪ automatique générer des plans, dont l'orientation et la position dans l'espace, permettant de disjoindre la cavité considérée des entrée(s) et sortie(s).

Dans tous les cas de figures, un moyen d'édition ou de modification du plan valvulaire généré par défaut peut être offert à un opérateur qui peut ajuster l'orientation et/ou le positionnement de ce dernier.

Lorsque la cavité est le ventricule gauche VG, l'oreillette droite OD ou l'oreillette gauche OG, le procédé de l'invention comprend une définition d'au moins un plan valvulaire permettant de fermer la cavité d'un orifice.

Le procédé de l'invention comprend une étape de sélection d'une densité de pixels de référence.

Selon un premier mode de réalisation, cette étape comprend préférentiellement une sélection de pixels d'une paroi de la cavité. Dans ce cas, la densité de pixels de référence est calculée pour définir une limite haute de densité de pixels d'une région d'intérêt définie dans la paroi.

Selon un second mode de réalisation, la sélection d'une densité de référence peut être choisie par une sélection de pixels de la cavité. Dans ce second mode, la densité de pixels de référence définie une limite basse d'une gamme de tolérance de croissance de pixels comme cela est détaillé ci-après.

Selon un troisième mode de réalisation, la densité de pixels de référence est calculée entre une gamme de valeur de densité de pixels de la cavité et une gamme de valeurs de densité de pixels de la paroi de sorte à discriminer les pixels de chacune des régions.

Enfin, selon un quatrième mode réalisation, la sélection d'une densité de référence peut être effectuée par défaut en fonction de la connaissance à priori des densités respectives de la cavité et de la paroi dans une population donnée.

Cette densité de pixels définie une densité de pixels de référence D_{ref}. Cette étape est notée D_{ref} à la figure 5. La sélection d'une densité de pixels de référence permet notamment de paramétrer une étape ultérieure du procédé, notamment l'étape de croissance.

Selon le premier mode de réalisation de la sélection d'une densité de référence, cette étape du procédé de l'invention comprend la définition d'une région d'intérêt 22 tracée par exemple dans la paroi 21'. On nomme cette paroi une paroi myocardique. La définition d'une région d'intérêt 22 permet de mesurer la moyenne et l'écart-type de la densité des pixels de cette région, exprimée en unité UH, c'est-à-dire en unités Hounsfield. La région d'intérêt 22 comprend au moins un pixel.

L'objectif de la définition d'une région d'intérêt 22 dans la paroi est de définir une gamme de valeurs de densité de pixels dont la densité de pixels de référence D_{ref} est calculée pour définir une limite supérieure de cette gamme. La densité de pixels de référence D_{ref} sert de référence dans l'opération de croissance de proche en proche. Lors de cette opération de croissance chaque densité de pixels considérée dans l'opération de croissance est comparée à la densité de pixels de référence.

La région d'intérêt 22 peut être définie sur une image de coupe en 2D ou peut être définie en 3D pour moyenner la densité de pixels sur un volume. Selon un mode de réalisation privilégié, la région d'intérêt 22 est définie dans la région inter ventriculaire séparant le ventricule droit VD du ventricule gauche VG. La paroi 21' offre une densité de pixels qui permet de définir une bonne référence pour réaliser ultérieurement une étape de croissance sans erreur de délimitation de la zone étendue. Une autre zone telle que la zone 20 ou la zone 21 peut également servir de manière alternative pour définir une région d'intérêt permettant de fixer une densité de référence D_{ref}.

Cette zone est particulièrement bien adaptée pour servir de référence pour la détermination d'une densité de pixels de référence D_{ref}.

Selon un autre mode de réalisation, il est possible de définir une densité de pixels de référence D_{ref} non pas via une mesure dans l'image mais en fonction d'une connaissance à priori sur la densité de la paroi dans une population donnée. Dans ce cas, une valeur par défaut peut être générée en fonction d'un paramétrage prédéfini.

Selon un mode de réalisation, un opérateur sélectionne une région d'intérêt 22 manuellement, c'est-à-dire par exemple au moyen d'un outil d'une palette graphique numérique ou d'une souris au regard de l'image qui s'affiche sur un écran. Une région d'intérêt 22 est ainsi définie sur la figure 2A. L'affichage de la région d'intérêt 22 en temps réel permet d'offrir à un opérateur un contrôle visuel notamment pour éviter de prélever de pixels des cavités 25 ou 26 correspondant respectivement au ventricule droit VD et au ventricule gauche VG.

Selon un autre mode de réalisation, un logiciel de traitement d'images permet d'effectuer une reconnaissance de forme d'une image 2D ou 3D afin de reconnaitre par exemple le ventricule droit VD et le ventricule gauche VG afin de définir une région d'intérêt 22 simple dans la paroi 21'. Une forme simple automatique générée peut être un cercle sur la vue de coupe ou une sphère sur l'image 3D.

Le procédé de l'invention comprend une étape comprenant la sélection d'au moins un pixel 27 ou d'une région 27 comprenant une pluralité de pixels. Ce pixel ou cette région 27 définit une graine qui permettra de définir une zone qui croît dans le volume pour aboutir à une zone 2D ou 3D étendue comblant la cavité. La cavité 250 comprend une densité de pixels supérieure à la densité de la paroi 21'. Cette différence de densité s'explique par la nature des tissus du myocarde et de celle du sang circulant dans la cavité 250.

Afin d'aboutir à une région 2D ou 3D comblant la cavité, le procédé de l'invention permet à partir d'un pixel ou d'une région sélectionnée au sein de la cavité d'étendre de proche en proche une zone s'agrandissant selon un critère donné. Cette étape d'extension est notée EXT ZONE à la figure 5. Un critère peut être d'étendre la région de proche en proche à tous les pixels dont la densité est supérieure à la densité de référence D_{ref}.

Dans le premier mode de réalisation correspondant au calcul d'une densité de référence dans la paroi, un seuil de densité 3 écart-types au-dessus de la moyenne mesurée dans la paroi peut être choisi afin que la région s'étende à l'ensemble de la cavité mais se limite au versant interne de la paroi, c'est-à-dire à l'endocarde. La densité de pixels de référence peut être donc choisie comme la valeur correspondante au seuil de densité 3 écart-types au-dessus de la moyenne mesurée dans la région d'intérêt 22 de la paroi 21'. Dans ce cas, la densité de pixels de référence définie une limite haute de la gamme de valeurs de densité de pixels définie autour d'une densité moyenne d'une région d'intérêt 22 de la paroi.

L'extension de la zone 27 peut se faire uniformément dans toutes les directions 28 du volume 3D ou du plan 2D correspondant à la zone 250. Le procédé de l'invention permet de réaliser cette étape d'extension de la zone 27 jusqu'à ce qu'un seuil prédéfini de densité soit rencontré. Le seuil de densité de pixels est défini hors de la tolérance de densité de pixels qui permet la croissance de proche en proche. Lorsqu'un pixel adjacent à la zone 27 comprend une densité inférieure au seuil de densité de pixels prédéfini, c'est-à-dire à la densité de référence, alors la croissance est stoppée et le pixel rencontré n'est pas intégré dans la zone 27 de croissance. Lorsque la zone 27 croit jusqu'à rencontrer des pixels voisins d'une paroi 20 ou 21', l'opération de croissance se termine. De ce fait, la croissance de la zone 27 a lieu jusqu'à rencontrer les parois entourant la cavité 250 qui ont une densité plus basse que la densité des pixels de la cavité 25 ou 250 et notamment plus basse que la densité de pixels de référence définissant le seuil de densité de pixels prédéfini.

Selon le second mode de réalisation de l'étape de sélection de la densité de référence D_{ref}, le procédé comprend une sélection d'une densité de référence D_{ref} de la cavité 27 et une sélection d'une gamme de tolérance de croissance de pixels.

Selon ce mode de réalisation, l'opération de croissance de la graine de proche en proche peut s'effectuer en comparant les densités de pixels adjacents et leur appartenance à une gamme de valeurs prédéfinie dite de tolérance de croissance. Cette gamme de valeurs est calculée à partir d'une mesure de la moyenne et de l'écart type des densités au sein de la cavité. On pourra calculer une gamme de tolérance par un pourcentage de la densité moyenne de la région choisie au départ (par exemple +/- 30% de la moyenne), ou dans un mode de réalisation privilégié par un écart à la moyenne mesuré en écart type (par exemple moyenne +/- 3 écart types). La densité de la région de départ au sein de la cavité 27 est donc utilisée pour définir la gamme de tolérance . A titre d'exemple, si la densité de pixels de la région de départ est de 275 et l'écart type de 25, la plage de valeur de tolérance peut être définie par exemple selon +/- 3 écart types par rapport à la moyenne, ce qui permet de définir une plage de valeurs de [200, 350]. Si un pixel voisin de la zone 27 n'appartient pas à cette plage, alors la croissance s'arrête à ce pixel voisin dans cette direction de propagation. Lorsqu'une densité de référence de pixels D_{ref} est choisie au sein de la cavité, seul un seuil minimal peut être choisi car les valeurs de la densité des pixels de la paroi sont plus petites que celle de la cavité. Ainsi en reprenant l'exemple précédent, une condition peut être exprimée de cette manière : tant que la densité de pixels rencontrée de proche en proche est supérieure à 200 UH, alors la croissance continue. La limite maximale 350 UH est optionnelle.

Selon un mode de réalisation, le critère peut être d'étendre la région 27 aux pixels adjacents à ladite région 27 si leur densité est comprise dans un intervalle proche de la densité des pixels de la région 27. Ainsi les pixels de la graine peuvent servir à calculer une densité de pixels de référence. Un seuil de tolérance peut être défini pour l'analyse de la densité d'un pixel voisin de sorte à générer de proche en proche une extension de la zone 27 comme cela est représenté à la figure 2C. dans ce dernier cas, le second mode de réalisation permet de calculer une densité de pixels de référence de la cavité comme une limite basse d'une sélection de pixels de la graine lorsque cette dernière représente une région d'intérêt ayant plus d'un pixel. Ainsi, la densité de pixels de référence permet de définir le seuil de tolérance.

Le seuil prédéfini de densité peut être fixé dans une gamme de valeurs correspondant aux densités de pixels minimales de la cavité 25. A titre d'exemple, il peut s'agir d'un pourcentage d'une densité moyenne constatée d'une cavité. Si la densité de pixels de la cavité est comprise entre 200 et 400 UH, alors un seuil large de 150 peut être défini. A titre de comparaison, la densité de pixels du myocarde de l'image acquise, par exemple dans la zone 21', est comprise entre 20 et 100 UH. En utilisant, un exemple de seuil de 150 UH, la zone 27 va s'étendre jusqu'à rencontrer la frontière de la paroi 20, 21'.

Lorsqu'un agent de contraste est utilisé dans le sang circulant dans la cavité 25, la densité des pixels de l'image obtenue de la cavité 25 ou 250 peut être rehaussée et donc la densité de référence D_{ref} de la cavité peut être relevée, la gamme de valeurs de tolérance de croissance associée peut être également rehaussée en rapport avec la valeur de la densité de référence de la cavité D_{ref}.

Selon un troisième mode de réalisation qui sera mieux compris à la lecture de la figure 4B, la densité de référence D_{ref} est calculée de sorte à offrir une valeur de comparaison permettant de discriminer chaque pixel analysé lors de l'opération de croissance au regard de deux gammes de valeurs respectivement associée à la cavité et à la paroi. La figure 4B représente la répartition de densité de pixels 46 dans la paroi 21' et la répartition de densité de pixels 45 dans la cavité 25. Chacune des répartitions 45, 46, dans cet exemple, prend l'allure d'une courbe gaussienne mais qui peut être différente selon les cas envisagés : profil du patient, type d'agent de contraste, prétraitement des images acquises, etc.

Les deux courbes se chevauchent dans une zone 47 dans laquelle la définition d'une densité de pixels D_{ref} permet de discriminer chacun des pixels des deux régions avec la meilleure précision.

Ce mode de réalisation correspond à une combinaison du premier mode de réalisation et du second mode de réalisation.

Selon le quatrième mode de réalisation de la sélection d'une densité de référence D_{ref}, la connaissance à priori d'un rapport entre la densité de pixels de la cavité 25 et de la paroi 20 ou 21' permet d'en déduire une règle de croissance de la région 27 selon la densité des pixels rencontrée de proche en proche.

Un avantage de la définition d'au moins un plan valvulaire qui a été préalablement défini et tracé selon le procédé de l'invention, est qu'il permet de définir une frontière d'arrêt au processus de croissance de la zone 27 sans pour autant que la densité des pixels voisins rencontrés ne soit inférieure au seuil prédéfini. Cette frontière évite que le processus de croissance ne s'étende dans les orifices tels que celui de l'artère pulmonaire 13 ou celui de la valve tricuspide 16. La zone d'extension 27 peut épouser le volume interne formé par l'intersection de la cavité 25 et du volume délimité par le plan valvulaire 11 et comprenant la graine 27.

La figure 2D représente un tel volume généré à partir de la croissance de la zone 27. Un avantage de la croissance de proche en proche entre les pixels en respectant une tolérance de densité sensiblement proche et de la définition d'un seuil prédéfini limitant la propagation de la croissance est que la zone 27 s'arrête nettement au niveau du tissu interne de la paroi 20, 21', c'est-à-dire de l'endocarde. Cette opération permet de délimiter la cavité et la paroi avec une grande précision compte tenu des différences de densités de pixels de ces deux zones 3D.

La région de croissance finale se limite donc à une cavité, et s'étend au sein de cette cavité jusqu'au versant interne de la paroi (endocarde), et jusqu'aux orifices. Selon un mode de réalisation particulier, l'invention permet une quantification sur plusieurs cavités ou sur le cœur entier. Le nombre de cavités explorées dépendra de la sélection des plans valvulaires d'entrée et de sortie. Entre ces 2 plans 1 ou plusieurs cavités pourront être analysées.

Le procédé de l'invention comprend une étape dans laquelle la zone étendue 3D, notée 27 à la figure 3A, est dilatée dans son volume d'une proportion donnée. Cette étape est notée DILAT sur la figure 5. La dilatation de la zone 27 peut être exprimée en un pourcentage du volume total ou par une distance de dilatation notée « d ». La distance de dilatation d correspond à une même distance de dilatation d du volume dans toutes les directions 28 compte tenu que la dilatation est homogène sur toute la surface du volume 27 qui est dilatée. L'opération de dilatation correspond à une homothétie de chaque plan de coupe de la surface 27. Cette dilatation peut s'effectuer en 2D, c'est à dire dans le sens du plan de coupe sur chacun des plans de coupe du volume, mais le mode de réalisation privilégié consiste à réaliser cette dilatation en 3D, c'est à dire dans la direction perpendiculaire à la surface de la zone étendue 3D, notée 27 à la figure 3A. Cette direction perpendiculaire à la surface du volume 3D peut ne pas être située dans le plan de coupe.

Selon un mode de réalisation, la zone 27 est dilatée d'une distance de dilatation de 1 à 12 mm. A titre d'exemple, une distance de 2 ou 3 mm peut être appliquée à la cavité délimitée par la zone 27 lorsqu'il s'agit du ventricule droit VD humain. Cette distance est particulièrement adaptée à la paroi délimitant le ventricule droit VD puisqu'elle correspond à l'épaisseur minimale de la paroi chez le sujet sain. Un avantage de l'adaptation de la valeur de la distance de dilatation d à l'épaisseur de la paroi est que seul le volume de la paroi pourra être traité dans les étapes ultérieures du procédé. Cette épaisseur permet donc de limiter l'analyse aux contours de la paroi sans que la graisse située à la surface extérieure de la paroi ne soit comptabilisée. Ceci présente un avantage important compte tenu que les masses graisseuses situées à l'extérieure de la paroi peuvent influer sur la quantification des masses graisseuses à l'intérieure de la paroi et que grâce au procédé de l'invention elles ne sont pas prises en compte. Néanmoins, il est possible de prendre en compte dans les étapes ultérieures du procédé les masses graisseuses situées à l'extérieure de la paroi 20, notamment sur sa surface extérieure de cette dernière en choisissant une distance de dilatation plus grande que 3 mm.

Le volume 27 ainsi dilaté aboutit à la définition d'un volume 27' dont la surépaisseur 20' est représentée à la figure 3B. Le volume 27' comprend donc, par l'effet de dilatation, le volume 27 et toute ou partie de la paroi 20 du ventricule droit VD.

Selon la cavité considérée, la distance de dilatation du volume 3D obtenue par l'extension de la zone 27 peut être adaptée. A titre d'exemple, lorsque la cavité est le ventricule gauche VG, la distance de dilatation d peut être définie sensiblement proche de 10 mm puisque l'épaisseur de la paroi du ventricule gauche VG est sensiblement égale à cette distance. Selon un autre mode de réalisation, plusieurs dilatations successives peuvent être appliquées afin d'explorer la présence de tissu fibro-adipeux au sein des différentes couches dans l'épaisseur de la paroi.

Le procédé de l'invention comprend une étape visant à extraire le volume 3D correspondant à la surépaisseur générée par l'opération de dilatation. Cette étape est notée EXTRACT sur la figure 5. Pour réaliser cette étape, le procédé comprend la soustraction du volume 27 au volume 27' dilaté.

La figure 3C représente une vue de coupe de la partie 20' correspondant à la surépaisseur du volume 27' obtenue grâce à l'opération de soustraction des deux précédents volumes 27' et 27.

En outre, le procédé de l'invention permet, de manière optionnelle, de définir une zone d'intérêt 30 permettant de détourer qu'une partie de l'image 3D obtenue après dilatation. Cette zone d'intérêt 30 permet de ne générer qu'une partie du volume susceptible d'être analysé par la suite par le procédé de l'invention. Typiquement, dans l'exemple de la dilatation du volume correspondant à une partie du ventricule droit VD, la délimitation 30 permet d'extraire la surépaisseur 20' correspondant à la frontière extérieure du ventricule droit VD et de ne pas traiter la frontière entre le ventricule droit VD et le ventricule gauche VG.

Le procédé de l'invention comprend alors une étape de quantification des densités de pixels de la région volumétrique 20'. Cette étape est notée QUANTIFICATION sur la figure 5. Cette étape comprend la lecture de l'image 20', le traitement de chaque pixel de cette région et l'enregistrement de chaque densité de pixels. Les pixels d'une gamme de valeur prédéfinie peuvent être dénombrés dans le volume extrait à l'étape EXTRACT.

Il est alors possible de représenter cette quantification sous forme d'un histogramme 40, tel que celui représenté à la figure 4A. La représentation sous forme d'un histogramme peut être générée par l'étape désignée par HIST à la figure 5. En ordonnée de cet histogramme sont comptabilisés le nombre de pixels, noté Nₚ, de même densité de pixels, la densité de pixels, notée Dₚ(UH), étant représentée en abscisse. L'unité de densité de pixels est l'unité de Hounsfield UH.

A la lecture de l'histogramme 40, il est possible de dénombrer le nombre de pixels compris par exemple entre -30 et -10 UH et d'en déduire un taux de présence de tels pixels dans la paroi du ventricule droit. Aux fins d'une meilleure interprétation de la figure 4, la limite 41 est représentée de sorte à identifier la proportion de pixels dont la densité est inférieure à -10 UH. La limite supérieure de l'histogramme pour les pixels de densité inférieure à -10 est représentée par la courbe 42. Selon un mode de réalisation, la quantification prend en compte tous les pixels inférieurs à un seuil, par exemple -10UH sur l'exemple donné dans la figure 4. Selon un autre mode de réalisation, plusieurs seuils pourront être appliqués afin de quantifier plusieurs masses graisseuses de densités différentes, par exemple de -150 à -50UH, et de -50UH à -10UH.

Selon un mode de réalisation, le procédé de l'invention comprend une étape de cartographie permettant de représenter en superposition de la cavité considérée, la surépaisseur 20' avec un codage colorimétrique donné. Cette étape est représentée par le bloc CARTO à la figure 5. L'étape de cartographie permet de visualiser la répartition des pixels correspondant par exemple à des masses graisseuses. Pour cela chaque pixel comprend une position 3D dans l'image et une densité de pixel. L'attribution d'une couleur d'un pixel est réalisée dès lors que sa densité est comprise dans un intervalle de valeurs donné, par exemple [-10, -30].

Le volume 20', ainsi généré et représenté sur un afficheur tel qu'un écran d'ordinateur, peut être visualisé par un opérateur. Des moyens de pilotage de la position et de l'orientation de l'image 20' peuvent être utilisés de sorte à effectuer des rotations dans l'espace du volume 20' pour en étudier la surface et la présence de graisses dans la paroi myocardique. L'image générée en 3D peut être intégrée au sein d'une plateforme de visualisation pour offrir à un chirurgien ou cardiologue interventionnel les moyens de piloter une intervention sur un cœur.

La figure 5 représente les différentes étapes du procédé de l'invention. On précise que les étapes PLAN VALV et les étapes D_{ref} ne sont pas réalisées selon un ordre d'exécution imposé lorsqu'elles requièrent des opérations manuelles d'un opérateur. Ce dernier peut indifféremment définir d'abord les plans valvulaires ou d'abord choisir la densité de référence.

Selon une variante du procédé de l'invention, l'opération de dilatation peut être effectuée de proche en proche par dilatation d'un pixel de tout le volume 27 précédemment étendue. Le volume 27 peut alors être soustrait au volume 27' ainsi dilatée pour obtenir une couche d'une largeur d'un pixel à laquelle une cartographie peut être appliquée. L'opération peut se répéter de proche en proche sur une pluralité de couches qui superposées correspondent à une surépaisseur d'une distance souhaitée, par exemple 3 mm.

Ce procédé permet de représenter chaque couche avec un codage colorimétrique propre qui permet une visualisation 3D avec une grande précision de lecture notamment du taux de pénétration de la graisse dans l'épaisseur de la paroi myocardique.

Selon une autre variante du procédé de l'invention, un codage colorimétrique peut être défini pour des segments de densité de pixels d'une plage de valeurs prédéfinie. Par exemple, en considérant une plage de valeurs de densités de pixels présentant un intérêt entre -10 et -50 UH, 4 segments peuvent être définis par les plages suivantes : [-10,-20], [-20,-30], [-30,-40], [-40,-50]. Chaque segment peut comprendre un codage colorimétrique attribué de sorte à représenter les variations de densités dans la représentation du volume 20' affiché.

Le procédé de l'invention peut comprendre optionnellement une étape préalable à l'acquisition d'images 3D qui comprend la diffusion d'un agent de contraste dans la cavité. Cet agent de contraste permet d'obtenir des densités de pixels des différentes parties du cœur très différentes, ce qui améliore le contraste par exemple entre une zone correspondant à la cavité considérée et une zone correspondant au myocarde. L'agent de contraste peut être par exemple un agent iodé hydrosoluble. Il peut être injecté par voie veineuse ou artérielle ou encore injecté par une perfusion lorsque le cœur est explanté.

Le procédé de l'invention est réalisé par exemple au moyen d'un ordinateur qui est configuré pour acquérir une image d'un scanner. Un logiciel permettant de représenter l'image à l'écran peut être utilisé. Les étapes du procédé peuvent être exécutées par un composant logiciel spécialement conçu à cet effet et qui est implémenté dans un logiciel existant ou dans un logiciel dédié à ces traitements. Le calculateur de l'ordinateur peut être utilisé afin d'effectuer toutes les étapes de traitement d'images à savoir notamment les opérations d'extension de zone, de dilatation et d'extraction d'un volume 3D périphérique tel que le volume 20'.

Selon un premier mode de réalisation, le procédé s'applique sur des images d'un cœur d'un homme ou d'une femme, le scanner étant réalisé dans la région du corps concerné.

Selon un autre mode de réalisation, le procédé s'applique sur des images acquises d'un cœur animal.

Selon un autre mode de réalisation, le procédé s'applique sur un cœur isolé par exemple explanté du corps humain. Il peut être par exemple perfusé.

La méthode de l'invention peut être utilisée pour le diagnostic de dysplasie arythmogène du ventricule droit, une pathologie du myocarde responsable d'une infiltration graisseuse de la paroi.

La méthode peut également être utilisée chez les patients dont le diagnostic de dysplasie arythmogène est déjà connu, afin non pas d'établir le diagnostic, mais de quantifier l'étendue de la maladie pour évaluer un pronostic, comme par exemple le risque d'arythmie ou d'insuffisance cardiaque. Une telle quantification peut s'appliquer de manière répétée chez un même patient afin de suivre l'évolution spontanée de la maladie, ou de suivre l'effet d'un éventuel traitement.

La méthode peut également être utilisée pour détecter et quantifier les séquelles d'infarctus du myocarde, qui sont également associées à une diminution de la densité du muscle sur les images obtenues par scanner. Outre la détection des séquelles d'infarctus, la quantification pourrait être utilisée afin d'évaluer un pronostic péjoratif lié à la taille de l'infarctus, comme le risque du développement d'une arythmie ou d'une insuffisance cardiaque.

Enfin, la méthode pourrait également s'appliquer à la détection et la quantification de la graisse au sein de la paroi des oreillettes. La méthode pourrait là aussi trouver des applications diagnostiques et pronostiques, en particulier chez les patients souffrant d'arythmie atriale comme la fibrillation auriculaire.

Au-delà de la détection et de la quantification de la graisse, et de ses applications au diagnostic et au pronostic des pathologies, la méthode de l'invention permet une cartographie 3D des régions graisseuses au sein du cœur. Elle peut donc être appliquée au guidage thérapeutique, en particulier dans les domaines de l'ablation et de la stimulation cardiaque. Il est aujourd'hui possible de localiser dans l'espace les sondes et cathéters intra-cardiaques au cours des interventions, et l'intégration de données 3D au sein de ces systèmes de localisation a déjà été montré faisable et utile pour l'assistance à la navigation intra-cardiaque et au ciblage des thérapies. La possibilité de visualiser les zones graisseuses au sein du muscle cardiaque peut donc permettre de guider les procédures d'ablation et de stimulation. Les pathologies concernées sont les troubles du rythme et de la conduction chez les patients souffrant de dysplasie arythmogène du ventricule droit, chez les patients présentant des cicatrices myocardiques (infarctus, myocardites, cicatrices chirurgicales), ou encore chez les patients souffrant de fibrillation auriculaire.

## Revendications

1. Méthode pour une quantification de présence de graisses dans une région du cœur (10) comprenant :
• une acquisition (ACQ) d'une image tridimensionnelle d'au moins une cavité (25, 26, VG, VD, OG, OD) du cœur (10) et d'une paroi (20, 21, 21') délimitant ladite cavité (25, 26, VG, VD, OG, OD) ;
• une sélection d'au moins un pixel (27) de la cavité (25, 26, VD, VG, OD, OG) définissant une graine (27);
• une croissance (EXT ZONE) de la graine (27) de proche en proche jusqu'à rencontrer une zone d'une densité de pixels (Dp) inférieure à un seuil prédéfini, la croissance de la graine (27) aboutissant à la définition d'une zone étendue (27) délimitée dont la densité de pixels est comprise dans une première gamme de valeurs (G₁), l'image 3D obtenue par croissance étant nommée « zone 3D étendue » (27) ;
• une opération de dilatation (DILAT) de la zone 3D étendue d'une distance de dilatation donnée, permettant de définir un volume dilaté (27') comprenant au moins une partie de l'épaisseur de la paroi (20) de la cavité (25, 26, VD, VG, OD, OG) considérée, la distance de dilatation correspondant à l'épaisseur minimale de la paroi (20, 21, 21') chez un sujet sain ;
• une opération d'extraction (EXTRACT) d'une région périphérique (20') issue de la soustraction du volume de la zone 3D étendue (27) au volume dilatée (27') et ;
• une quantification (QUANTIFICATION) du nombre de pixels d'une seconde gamme de valeurs (G₂) de la région périphérique extraite.

2. Méthode pour une quantification de présence de graisses selon la revendication 1, **caractérisée en ce que** l'acquisition d'une image tridimensionnelle du cœur est réalisée au moyen d'un scanner, la densité des pixels de l'image étant exprimée dans l'unité de Hounsfield.

3. Méthode pour une quantification de présence de graisses dans une région du cœur (10) selon l'une quelconque des revendications 1 à 2, **caractérisée en ce qu'**elle comprend :
• une définition d'au moins une frontière (PV, 11, 12) de l'image tridimensionnelle de la cavité considérée du cœur (VG, VD, OG, OD) ;
• la croissance (EXT ZONE) de la graine (27) s'effectuant jusqu'à rencontrer au moins une frontière (PV, 11, 12) ou une zone d'une densité de pixels inférieure au seuil prédéfini.

4. Méthode pour une quantification de présence de graisses selon la revendication 3, **caractérisée en ce que** la frontière (PV, 11, 12) permet de séparer la partie de l'image acquise comprenant la cavité (25) considérée d'un orifice débouchant dans ladite cavité (25) dont la densité de pixels est comprise dans la première gamme de valeurs (G₁).

5. Méthode pour une quantification de présence de graisses selon l'une quelconque des revendications 1 à 4, **caractérisée en ce que** la croissance (EXT ZONE) de la graine (27) s'effectue :
▪ soit en trois dimensions à partir d'une sélection de pixels sur un plan de coupe (25) de la cavité ;
▪ soit en deux dimensions sur chaque plan de coupe de la cavité (25), la « zone 3D étendue » (27) étant reconstituée par l'ensemble de « zones 2D étendue».

6. Méthode pour une quantification de présence de graisses selon l'une quelconque des revendications 1 à 5, **caractérisée en ce que** le seuil prédéfini est défini au regard d'une détermination d'une densité de pixels de référence (D_{ref}) calculée à partir d'une mesure dans l'image acquise, ladite image acquise comprenant la cavité (25) et au moins une des parois (20, 21, 21') de ladite cavité.

7. Méthode pour une quantification de présence de graisses selon la revendication 6, **caractérisée en ce que** la densité de référence (D_{ref}) est calculée à partir d'une mesure effectuée sur des pixels :
▪ de la cavité (25), la densité de référence (D_{ref}) correspondant à une limite basse de la première gamme (G₁) de valeurs densité de pixels, et/ou ;
▪ d'une paroi (20, 21, 21') définissant une région d'intérêt (22), la densité de référence (D_{ref}) correspondant à une limite haute d'une troisième gamme de valeurs (G₃) de densité de pixels de la région d'intérêt (22).

8. Méthode pour une quantification de présence de graisses selon la revendication 7, **caractérisée en ce que** la densité de pixels de référence (D_{ref}) est calculée dans une plage de valeurs située entre la première gamme (G₁) de valeurs et la troisième gamme de valeurs (G₃) de sorte à discriminer au mieux l'appartenance d'un pixel à l'une de ces gammes de valeurs (G₁, G₃).

9. Méthode pour une quantification de présence de graisses selon la revendication 6, **caractérisée en ce que** la mesure de la densité de référence (D_{ref}) est choisie parmi une valeur prédéfinie correspondant à un profil type d'un cœur.

10. Méthode pour une quantification de présence de graisses selon l'une quelconque des revendications 1 à 9, **caractérisée en ce que** l'opération de dilatation (DILAT) est réitérée une pluralité de fois de sorte à générer une pluralité d'images 3D dilatées, les dilatations successives étant déterminées de sorte que chaque nouvelle image 3D dilatée comprennent la précédente image 3D dilatée.

11. Méthode pour une quantification de présence de graisses selon la revendication 10, **caractérisée en ce qu'**une couche 3D d'une région périphérique de l'image 3D étendue est extraite par soustraction d'une N-1^{ième} image dilatée de l'image 3D étendue (27) à la N^{ième} image dilatée de l'image 3D étendue (27).

12. Méthode pour une quantification de présence de graisses selon l'une quelconque des revendications 1 à 11, **caractérisée en ce qu'**une opération de quantification (QUANTIFICATION) comprend le dénombrement du nombre de pixels d'une densité comprise dans la seconde gamme de valeurs (G₂) dans une couche 3D extraite ou d'une région périphérique 3D.

13. Méthode pour une quantification de présence de graisses selon la revendication 12, **caractérisée en ce qu'**une opération de seuillage des densités de pixels (HIST) de la région 3D périphérique (20') comprend une répartition (40) selon une pluralité de gammes de valeurs de différentes proportions de densités de pixels (Dₚ).

14. Méthode pour une quantification de présence de graisses selon la revendication 12, **caractérisée en ce qu'**une génération d'une cartographie 3D de la paroi de la cavité (25, 26, VD, VG, OD, OG) comprend :
▪ la représentation des pixels d'une densité comprise dans la seconde gamme de valeurs (G₂) avec un codage colorimétrique prédéfini, ou ;
▪ une subdivision de la seconde gamme de valeurs (G₂) en une pluralité de sous-gammes de valeurs (SG_{i,i∈[1, N]}) correspondant à différentes proportions de densités de pixels (Dₚ) avec un codage colorimétrique prédéfini attribué à chaque subdivision (SG_{i,i∈[1, N]}).

15. Système pour la visualisation d'une imagerie d'un organe permettant la visualisation de masses graisseuses, comprenant des moyens de mettre en œuvre la méthode pour une quantification de présence de graisse selon l'une quelconque des revendications 1 à 14, caractérisé en qu'il comprend :
▪ un afficheur permettant :
∘ de visualiser une coupe d'une image tridimensionnelle acquise par un scanner ;
∘ de visualiser une image tridimensionnelle dont la cartographie générer par le procédé de l'invention ;
▪ un sélectionneur :
∘ d'au moins un pixel pour définir une densité de référence et ;
∘ d'au moins un pixel pour générer une zone 3D étendue obtenue par croissance de proche en proche ;
▪ un outil permettant de tracer une ligne définissant au moins un plan valvulaire ;
▪ une interface :
∘ permettant de paramétrer la distance de dilatation d ;
∘ d'extraire une surépaisseur tridimensionnelle à partir du volume issu de la zone 3D étendue et de zone 3D dilatée ;
▪ des moyens de calculs permettant :
∘ de dénombrer le nombre de pixels de la surépaisseur tridimensionnelle ayant une densité comprise dans un intervalle de valeur prédéfini ;
∘ de réaliser tous les calculs permettant de traiter les opérations sur les images 3D dont notamment les opérations de dilatation, d'extension, d'extraction.

## Patentansprüche

1. Verfahren für eine Quantifizierung des Vorhandenseins von Fetten in einer Region des Herzens (10), umfassend:
▪ eine Erfassung (ACQ) eines dreidimensionalen Bildes von mindestens einem Hohlraum (25, 26, VG, VD, OG, OD) des Herzens (10) und von einer Wand (20, 21, 21'), die den Hohlraum (25, 26, VG, VD, OG, OD) begrenzt;
▪ eine Auswahl von mindestens einem Pixel (27) des Hohlraums (25, 26, VD, VG, OD, OG), das ein Korn (27) definiert;
▪ ein Wachstum (EXT ZONE) des Korns (27) nach und nach bis zur Begegnung mit einer Zone mit einer Pixeldichte (Dp) unter einer vorher festgelegten Schwelle, wobei das Wachstum des Korns (27) zu der Definition einer begrenzten erweiterten Zone (27) führt, deren Pixeldichte in einem ersten Wertebereich (G₁) liegt, wobei das durch Wachstum erhaltene 3D-Bild als "erweiterte 3D-Zone" (27) bezeichnet wird;
▪ eine Dilatationsoperation (DILAT) der erweiterten 3D-Zone um eine gegebene Dilatationsdistanz, die erlaubt, ein dilatiertes Volumen (27') zu definieren, das mindestens einen Teil der Dicke der Wand (20) des entsprechenden Hohlraums (25, 26, VD, VG, OD, OG) umfasst, wobei die Dilatationsdistanz der minimalen Dicke der Wand (20, 21, 21') bei einer gesunden Person entspricht;
▪ eine Extraktionsoperation (EXTRACT) einer peripheren Region (20') im Ergebnis der Subtraktion des Volumens der erweiterten 3D-Zone (27) vom dilatierten Volumen (27'); und
▪ eine Quantifizierung (QUANTIFICATION) der Pixelanzahl eines zweiten Wertebereichs (G₂) der extrahierten peripheren Region.

2. Verfahren für eine Quantifizierung des Vorhandenseins von Fetten nach Anspruch 1, **dadurch gekennzeichnet, dass** die Erfassung eines dreidimensionalen Bildes des Herzens mit einem Scanner durchgeführt wird, wobei die Pixeldichte des Bildes in der Hounsfield-Einheit ausgedrückt wird.

3. Verfahren für eine Quantifizierung des Vorhandenseins von Fetten in einer Region des Herzens (10) nach einem der Ansprüche 1 bis 2, **dadurch gekennzeichnet, dass** es umfasst:
▪ eine Definition von mindestens einer Grenze (PV, 11, 12) des dreidimensionalen Bildes des entsprechenden Hohlraums des Herzens (VG, VD, OG, OD);
▪ das Wachstum (EXT ZONE) des Korns (27), das bis zur Begegnung mit mindestens einer Grenze (PV, 11, 12) oder einer Zone einer Pixeldichte unter der vorher festgelegten Schwelle erfolgt.

4. Verfahren für eine Quantifizierung des Vorhandenseins von Fetten nach Anspruch 3, **dadurch gekennzeichnet, dass** die Grenze (PV, 11, 12) erlaubt, den Teil des erfassten Bildes, das den entsprechenden Hohlraum (25) umfasst, von einer Öffnung zu trennen, die in den Hohlraum (25) ausmündet, dessen Pixeldichte im ersten Wertebereich liegt.

5. Verfahren für eine Quantifizierung des Vorhandenseins von Fetten nach einem der Ansprüche 1 bis 4, **dadurch gekennzeichnet, dass** das Wachstum (EXT ZONE) des Korns (27) erfolgt:
▪ entweder in drei Dimensionen auf der Basis einer Auswahl von Pixeln auf einer Schnittebene (25) des Hohlraums;
▪ oder in zwei Dimensionen auf jeder Schnittebene des Hohlraums (25), wobei die "erweiterte 3D-Zone" (27) durch die Gesamtheit von "erweiterten 2D-Zonen" wiederhergestellt wird.

6. Verfahren für eine Quantifizierung des Vorhandenseins von Fetten nach einem der Ansprüche 1 bis 5, **dadurch gekennzeichnet, dass** die vorher festgelegte Schwelle im Hinblick auf eine Bestimmung einer Pixel-Referenzdichte (D_{ref}) definiert ist, die auf der Basis einer Messung im erfassten Bild berechnet wird, wobei das erfasste Bild den Hohlraum (25) und mindestens eine der Wände (20, 21, 21') des Hohlraums umfasst.

7. Verfahren für eine Quantifizierung des Vorhandenseins von Fetten nach Anspruch 6, **dadurch gekennzeichnet, dass** Referenzdichte (D_{ref}) auf der Basis einer Messung berechnet wird, die an Pixeln durchgeführt wird:
▪ des Hohlraums (25), wobei die Referenzdichte (D_{ref}) einem unteren Limit des ersten Pixeldichte-Wertebereichs (G₁) entspricht, und/oder
▪ einer Wand (20, 21, 21'), die eine interessierende Region (22) definiert, wobei die entsprechende Referenzdichte (D_{ref}) einem oberen Limit eines dritten Pixeldichte-Wertebereichs (G₃) der interessierenden Region (22) entspricht.

8. Verfahren für eine Quantifizierung des Vorhandenseins von Fetten nach Anspruch 7, **dadurch gekennzeichnet, dass** die Pixel-Referenzdichte (D_{ref}) in einem Werteabschnitt berechnet wird, der sich zwischen dem ersten Wertebereich (G₁) und dem dritten Wertebereich (G₃) befindet, so dass die Zugehörigkeit eines Pixels zu einem dieser Wertebereiche (G₁, G₃) so gut wie möglich unterschieden wird.

9. Verfahren für eine Quantifizierung des Vorhandenseins von Fetten nach Anspruch 6, **dadurch gekennzeichnet, dass** die Messung der Referenzdichte (D_{ref}) aus einem vorher festgelegten Wert ausgewählt wird, der einem typischen Profil eines Herzens entspricht.

10. Verfahren für eine Quantifizierung des Vorhandenseins von Fetten nach einem der Ansprüche 1 bis 9, **dadurch gekennzeichnet, dass** die Dilatationsoperation (DILAT) eine Vielzahl von Malen wiederholt wird, so dass eine Vielzahl von dilatierter 3D-Bilder erzeugt wird, wobei die aufeinanderfolgenden Dilatationen derart bestimmt sind, dass jedes neue dilatierte 3D-Bild das vorangegangene dilatierte 3D-Bild umfasst.

11. Verfahren für eine Quantifizierung des Vorhandenseins von Fetten nach Anspruch 10, **dadurch gekennzeichnet, dass** eine 3D-Schicht einer peripheren Region des erweiterten 3D-Bildes durch Subtraktion eines N-1-ten dilatierten Bildes des erweiterten 3D-Bildes (27) vom N-ten dilatierten Bild des erweiterten 3D-Bildes (27) extrahiert wird.

12. Verfahren für eine Quantifizierung des Vorhandenseins von Fetten nach einem der Ansprüche 1 bis 11, **dadurch gekennzeichnet, dass** eine Quantifizierungsoperation (QUANTIFICATION) die Zählung der Anzahl von Pixeln einer Dichte umfasst, die im zweiten Wertebereich (G₂) in einer extrahierten 3D-Schicht oder einer peripheren 3D-Region liegt.

13. Verfahren für eine Quantifizierung des Vorhandenseins von Fetten nach Anspruch 12, **dadurch gekennzeichnet, dass** eine Schwellenwertvergleichsoperation der Pixeldichten (HIST) der peripheren 3D-Region (20') eine Verteilung (40) gemäß einer Vielzahl von Wertebereichen verschiedener Pixeldichtenverhältnisse (Dₚ) umfasst.

14. Verfahren für eine Quantifizierung des Vorhandenseins von Fetten nach Anspruch 12, **dadurch gekennzeichnet, dass** eine Erzeugung einer 3D-Kartographie der Wand des Hohlraums (25, 26, VD, VG, OD, OG) umfasst:
▪ die Darstellung der Pixel einer Dichte, die im zweiten Wertebereich (G₂) liegt, mit einer vorher festgelegten kolorimetrischen Codierung; oder
▪ eine Untergliederung des zweiten Wertebereichs (G₂) in eine Vielzahl von Werteunterbereichen (SG_{i,i ∈[1, N]}), die verschiedenen Pixeldichteverhältnissen (Dₚ) entsprechen, mit einer jeder Untergliederung (SG_{i,i∈[1, N]}) zugewiesenen kolorimetrischen Codierung.

15. System für die Visualisierung einer Abbildung eines Organs, das die Visualisierung von Fettmassen erlaubt, umfassend Mittel zur Durchführung des Verfahrens für eine Quantifizierung des Vorhandenseins von Fett nach einem der Ansprüche 1 bis 14, **dadurch gekennzeichnet, dass** es umfasst:
▪ ein Display, das erlaubt:
∘ die Visualisierung eines Schnitts eines von einem Scanner erfassten dreidimensionalen Bildes;
∘ die Visualisierung eines dreidimensionalen Bildes, darunter die von dem erfindungsgemäßen Verfahren erzeugte Kartographie;
▪ einen Selektor:
∘ mindestens eines Pixels, um eine Referenzdichte zu definieren; und
∘ mindestens eines Pixels, um eine erweiterte 3D-Zone zu erzeugen, die durch Wachstum nach und nach erhalten wird;
▪ ein Werkzeug, das erlaubt, eine Linie nachzuverfolgen, die mindestens eine Herzklappenebene definiert;
▪ eine Schnittstelle:
∘ die erlaubt, die Dilatationsdistanz d zu parametrieren;
∘ eine dreidimensionale Überdicke auf der Basis des Volumens im Ergebnis der erweiterten 3D-Zone und der dilatierten 3D-Zone zu extrahieren;
▪ Berechnungsmittel, die erlauben:
∘ die Pixelanzahl der dreidimensionalen Überdicke mit einer Dichte zu zählen, die in einem vorher festgelegten Werteintervall liegt;
∘ alle Berechnungen durchzuführen, die erlauben, die Operationen auf den 3D-Bilder durchzuführen, darunter vor allem die Dilatations-, Extensions- und Extraktionsoperationen.

## Claims

1. A method for quantising the presence of fats in a region of the heart (10) comprising:
• acquiring (ACQ) a three-dimensional image of at least one cavity (25, 26, VG, VD, OG, OD) of the heart (10) and of a wall (20, 21, 21') delimiting said cavity (25, 26, VG, VD, OG, OD);
• selecting at least one pixel (27) of the cavity (25, 26, VD, VG, OG, OD) defining a seed (27);
• gradually growing (EXT ZONE) the seed (27) up to meeting a zone of a pixel density (Dp) lower than a predefined threshold, growing the seed (27) resulting in defining a delimited extended zone (27) the pixel density of which is included in a first range of values (G₁), the 3D image obtained by growing being called an "extended 3D zone" (27);
• an operation of dilating (DILAT) the extended 3D zone by a given dilatation distance, for defining a dilated volume (27') comprising at least a portion of the thickness of the wall (20) of the considered cavity (25, 26, VD, VG, OG, OD), the dilatation distance corresponding to the minimum thickness of the wall (20, 21, 21') in a healthy subject;
• an operation of extracting (EXTRACT) a peripheral region (20') from the subtraction of the volume of the extended 3D zone (27) from the dilated volume (27') and;
• quantising (QUANTIFICATION) the number of pixels of a second range of values (G₂) of the extracted peripheral region.

2. The method for quantising the presence of fats according to claim 1, **characterised in that** acquiring a three-dimensional image of the heart is carried out by means of a scanner, the pixel density of the image being expressed in Hounsfield units.

3. The method for quantising the presence of fats in a region of the heart (10) according to any of claims 1 to 2, **characterised in that** it comprises:
• defining at least one boundary (PV, 11, 12) of the three-dimensional image of the considered cavity of the heart (VG, VD, OG, OD);
• growing (EXT ZONE) the seed (27) being performed up to meeting at least one boundary (PV, 11, 12) or a zone of a pixel density lower than the predefined threshold.

4. The method for quantising the presence of fats according to claim 3, **characterised in that** the boundary (PV, 11, 12) makes it possible to separate the part of the acquired image comprising the considered cavity (25) of a port opening into said cavity (25) the pixel density of which is included in the first range of values (G₁).

5. The method for quantising the presence of fats according to any of claims 1 to 4, **characterised in that** growing (EXT ZONE) the seed (27) is performed:
▪ either in three dimensions from a selection of pixels on a cross-sectional plane (25) of the cavity;
▪ or in two dimensions on each cross-sectional plane of the cavity (25), the "extended 3D zone" (27) being reconstructed by all the "extended 2D zones".

6. The method for quantising the presence of fats according to any of claims 1 to 5, **characterised in that** the predefined threshold is defined with regard to determining a reference pixel density (D_{ref}) calculated from a measurement in the acquired image, said acquired image comprising the cavity (25) and at least one of the walls (20, 21, 21') of said cavity.

7. The method for quantising the presence of fats according to claim 6, **characterised in that** the reference density (D_{ref}) is calculated from a measurement performed on pixels:
▪ of the cavity (25), the reference density (D_{ref}) corresponding to a low limit of the first range of values (G₁) of pixel density, and/or;
▪ of a wall (20, 21, 21') defining a region of interest (22), the reference density (D_{ref}) corresponding to a high limit of a third range of values (G₃) of pixel density of the region of interest (22).

8. The method for quantising the presence of fats according to claim 7, **characterised in that** the reference pixel density (D_{ref}) is calculated in a range of values situated between the first range of values (G₁) and the third range of values (G₃) so as to best discriminate the fact that a pixel belongs to one of these ranges of values (G₁, G₃).

9. The method for quantising the presence of fats according to claim 6, **characterised in that** the measurement of the reference density (D_{ref}) is selected from a predefined value corresponding to a standard profile of a heart.

10. The method for quantising the presence of fats according to any of claims 1 to 9, **characterised in that** the dilatation operation (DILAT) is reiterated a plurality of times so as to generate a plurality of dilated 3D images, successive dilatations being determined so that each new dilated 3D image comprises the previous dilated 3D image.

11. The method for quantising the presence of fats according to claim 10, **characterised in that** a 3D layer of a peripheral region of the extended 3D image is extracted by subtracting an N-1^{th} dilated image of the extended 3D image (27) from the N^{th} dilated image of the extended 3D image (27).

12. The method for quantising the presence of fats according to any of claims 1 to 11, **characterised in that** a quantification operation (QUANTIFICATION) comprises counting the number of pixels of a density included in the second range of values (G₂) in a extracted 3D layer or a 3D peripheral region.

13. The method for quantising the presence of fats according to claim 12, **characterised in that** an operation of thresholding the pixel densities (HIST) of the peripheral 3D region (20') comprises distributing (40) according to a plurality of ranges of values of different proportions of pixel densities (Dₚ).

14. The method for quantising the presence of fats according to claim 12, **characterised in that** generating 3D mapping of the wall of the cavity (25, 26, VD, VG, OG, OD) comprises:
▪ representing pixels of a density included in the second range of values (G₂) with a predefined colourimetric coding, or;
▪ subdividing the second range of values (G₂) into a plurality of sub-ranges of values (SG_{i,i∈[1, N]}) corresponding to different proportions of pixel densities (Dₚ) with a predefined colourimetric coding assigned to each subdivision (SG_{i,i∈[1}, _{N]}).

15. A system for viewing an imaging of an organ for viewing fat masses, comprising means for implementing the method for quantising the presence of fats according to any of claims 1 to 14, **characterised in that** it comprises:
▪ a display for:
∘ viewing a cross-section of a three-dimensional image acquired by a scanner;
∘ viewing a three-dimensional image the mapping of which is generated by the method of the invention;
▪ a selector:
∘ of at least one pixel to define a reference density and;
∘ of at least one pixel to generate an extended 3D zone obtained by gradual growing;
▪ a tool for tracing a line defining at least one valvular plane;
▪ an interface:
∘ for parameterising the dilatation distance d;
∘ for extracting a three-dimensional extra thickness from the volume from the extended 3D zone and the dilated 3D zone;
▪ calculation means for:
∘ counting the number of pixels of the three-dimensional extra thickness having a density included in a predefined interval of values;
∘ carrying out all the calculations for processing the operations on the 3D images especially including the dilatation, extension and extraction operations.
